# EUROPÄISCHE PATENTSCHRIFT

(11) **EP 1 389 486 B1**
(45) Veröffentlichungstag und Bekanntmachung des Hinweises auf die Patenterteilung: **19.10.2005**
(21) Anmeldenummer: 03015586.5
(22) Anmeldetag: 14.07.2003
(51) Int. Cl.: B01D 35/147, F16K 17/04

(54) **Ventil zur Steuerung eines Fluidstromes**
Valve for controlling fluid flow
Soupape de contrôle d'un écoulement de fluide

(30) Priorität: 16.07.2002 DE 10232045
(43) Veröffentlichungstag der Anmeldung: 18.02.2004
(73) Patentinhaber: MANN+HUMMEL GmbH, 71638 Ludwigsburg (DE)
(72) Erfinder: Dworatzek, Klemens, 68535 Edingen (DE); Münkel, Karlheinz, 75038 Oberderdingen-Flehingen (DE)
(74) Vertreter: Voth, Gerhard

(56) Entgegenhaltungen:
- EP-A- 0 812 610
- DE-A- 4 214 500
- GB-A- 2 356 704
- US-A- 3 001 546
- US-A- 4 198 028
- US-A- 5 584 987

## Beschreibung

Die Erfindung bezieht sich auf ein Ventil zur Steuerung eines Fluidstromes, vorzugsweise in einer Kurbelgehäuseentlüftung nach dem Oberbegriff des Anspruches 1. Außerdem betrifft die Erfindung eine Filtereinrichtung nach Anspruch 11.

Beispiele hierzu geben die DE 199 49 564 A1, die DE 196 05 425 C2 oder die DE 200 04 431 U1 an. Das eigentliche Ventil besteht hier immer aus mindestens vier Teilen, nämlich einem Grundkörper und einem Ventilkörper jeweils korrespondierend zur Erzielung einer Dichtwirkung, einem Spannelement und einem Gegenlager dieses Spannelementes. So ist es also immer notwendig, durch eine Stützkonstruktion unabhängig vom Ventil ein Gegenlager bereitzustellen. Dieses erfordert im einfachen Fall einen Stützdom, im komplizierteren Fall Tragarme, welche möglichst wenige Strömungshindemisse darstellen. Hierdurch wird der Herstellungsprozess teuer und aufwendig. Die EP 0 812 610 A2 zeigt ein Ventil, aufweisend einen Grundkörper und einen Ventilkörper, wobei ein Teil des Ventilkörpers ungeführt durch den Grundkörper hindurchragt. US 4,198,028 zeigt ein Druckregulierventil aufweisend einen Grundkörper und einen Ventilkörper, wobei ein Teil des Ventilkörpers geführt durch den Grundkörper hindurchragt.

Der Erfindung liegt das Problem zugrunde, ein konstruktiv einfaches Ventil zu schaffen, welches universell einsetzbar ist, wenig Platz einnimmt, preisgünstig in der Herstellung ist und das als Druckregel- oder als Durchgangsventil einsetzbar ist.

Dieses Problem wird erfindungsgemäß mit den Merkmalen der Ansprüche 1 und 10 gelöst. Die Unteransprüche geben zweckmäßige Weiterbildungen an.

### Vorteile der Erfindung

Die erfindungsgemäßen Ventile finden vorzugsweise in Filtereinrichtungen Verwendung, welche für die Filterung eines Gasstromes oder Flüssigkeitsstromes eingesetzt werden, wie z.B. Kurbelgehäuseentlüftungen oder Ölmodule in Brennkraftmaschinen. Sie sind jedoch auch in allen anderen Vorrichtungen denkbar, in denen Steuerungsventile oder Öffnungs- bzw. Überströmventile zur Steuerung und / oder Regulierung von Fluidströmen eingesetzt werden.

Das erfindungsgemäße Ventil beinhaltet einen Grundkörper, welcher bevorzugt radial und scheibenförmig ausgebildet ist und über eine integrierte Ventilkörperführung und Durchgangsöffnungen verfügt. Dieser Grundkörper, welcher zur Anbindung an das jeweilige Gehäuse, in dem das Ventil eingesetzt werden soll, dient, kann jede beliebige Grundform aufweisen, also auch eckig, kugelig oder zylindrisch. Die in den Grundkörper integrierte Ventilkörperführung ist bevorzugt als radialer Hohlzylinder ausgeführt, um den Ventilkörper an der inneren und / oder äußeren Wandfläche sicher zu führen und ein Kippen des Ventilkörpers zu vermeiden. Ebenso kann jedoch diese Führung aus mehreren Zylindern bestehen oder eine eckige Grundfläche beinhalten. Die in den Grundkörper integrierte Öffnung soll Einerseits einen Fluiddurchgang ermöglichen und andererseits einen oder mehrere Teile des Ventilkörpers die Möglichkeit geben, durch den Grundkörper hindurchzuragen. Dabei ist die Gestalt der Öffnung frei und kann individuell gewählt werden. Im bevorzugten Fall sind es mehrere Öffnungen in Form von Kreisausschnitten zur Ermöglichung des Fluiddurchgangs und zum Durchragen von Teilen des Ventilkörpers, die zur Aufnahme des Spannmittels dienen und weiterhin eine radiale Durchgangsöffnung zur Aufnahme eines Führungsdorns des Ventilkörpers. Der Ventilkörper kann als Kugel, Zylinder, Platte, Kegel, Konus oder einer im Stand der Technik sonstigen bekannten Form ausgebildet sein. Er muss zum Einen korrespondierend mit dem Grundkörper eine Abdichtung erzielen und zum Anderen eine Möglichkeit bieten, ein Spannmittel aufzunehmen. Bevorzugt ist der Ventilkörper als kreisrunde Platte ausgebildet mit Anteilen zur Aufnahme des Spannmittels, welche durch den Grundkörper hindurchragen. Dieses Spannmittel ist ein federelastisches Element, welches z. B. als Blockfeder, Spiralfeder, Spanngummi oder auch als federnder Kunststoffschaum ausgeführt sein kann. Bevorzugt wird eine Spiralfeder, um so eine radial gleichmäßig verteilte Krafteinleitung in axialer Richtung zu bewirken und eine Möglichkeit verschiedener Federkennlinien bei gleichen Außenabmessungen zu erhalten, aber es sind alle aus dem Stand der Technik bekannten federelastischen Elemente denkbar. Ebenso sind Druckfedern den Zugfedern vorzuziehen, da diese einen auslegungstechnischen und wirtschaftlichen Vorteil bieten.

Gemäß der Erfindung beinhaltet der Ventilkörper einen Führungsdorn, welcher den Grundkörper durch die korrespondierende Ventilkörperführung durchstößt und so eine radiale Verschiebung relativ zum Grundkörper oder ein Kippen des Ventilkörpers verhindert, wodurch eine zuverlässige Abdichtung gewährleistet ist. Dieser Führungsdorn kann als Zylinderstift, als Hohlzylinder oder als über Kreuz geführte Stege ausgeführt werden, es sind vielerlei Ausgestaltungen aus dem Stand der Technik möglich. Ebenso können mehrere Führungsdorne verteilt angeordnet sein. Der Führungsdorn muss allerdings korrespondierend zur Ausgestaltung der Ventilkörperführung gestaltet sein.

Durch eine korrespondierende Verknüpfung von Grundkörper, Ventilkörper und Spannelement wird eine lösbare, dichtende Verbindung zwischen der dem Ventilkörper zugewandten Ventilseite des Grundkörpers und dem Ventilkörper erzielt. Hierzu greift ein Teil des Ventilkörpers durch die beliebig gestaltete Öffnung des Grundkörpers hindurch und bietet eine Aufnahme für das Spannmittel, welches sich dadurch zwischen der dem Ventilkörper abgewandten Seite des Grundkörpers und dem durch den Grundkörper ragenden Teil des Ventilkörpers abstützt. In einer vorteilhaften Ausgestaltung der Erfindung geschieht diese Abstützung am Ventilkörper durch ein Widerlager, insbesondere einem Schnapphaken. Es sind allerdings auch einfache Haken, Kerben, eine Bohrung mit einem Stift und weitere im Stand der Technik bekannte Aufnahmemöglichkeiten denkbar. Im Grundzustand stützt sich das Spannmittel zwischen Grundkörper und Ventilkörper ab und kehrt so die im Stand der Technik bekannte Krafteinleitung der Zuhaltekraft um, das Ventil wird zugezogen und nicht zugedrückt. Bei einer Krafteinwirkung aufgrund einer Druckdifferenz entgegen der Kraftrichtung des Spannelements, welche die Kraft des Spannelements überwindet, hebt sich der Ventilkörper vom Grundkörper und öffnet so die im Grundzustand geschlossene dichtende Verbindung. Zur Abdichtung können Dichtmittel wie Dichtringe oder ähnliches vorgesehen sein.

Durch diese Ausgestaltung ist es einerseits möglich, das Ventil unabhängig von dem Vorhandensein eines gehäuseseitigen Gegenlagers universell einzusetzen, welches eine einfachere Gehäuseerstellung ermöglicht und andererseits sind die Kosten für die Herstellung und der Herstellungsaufwand des Ventils äußerst gering. Im Idealfall kann dieses Ventil aus zwei einfachen Teilen bestehen. Dieses bedeutet eine Minimierung auf das Wesentliche, ohne an der Funktion einzusparen. Ebenso ergibt sich hierbei ein weitaus geringerer Platzbedarf als bei den herkömmlichen Ventilen nach dem Stand der Technik, und es lassen sich herkömmliche Systeme, welche auf Zugfedern basieren, einfach durch das oben vorgestellte System ersetzen.

Gemäß einer weiteren Ausgestaltung der Erfindung kann die Ventilführung des Grundkörpers mit einer Möglichkeit zur gezielten Verstellung der Kombination des Spannmittels mit dem Ventilkörper und dem Grundkörper und damit der Ventilcharakteristik ausgeführt sein. So können an sich baugleiche Ventile eine völlig unterschiedliche Charakteristik aufweisen. Dieses bewirkt, durch die sich ändernden Öffnungszeiten, andere Strömungsvolumina und ein verändertes Öffnungs- bzw. Schließverhalten des Ventils. Bei einem weicher eingestellten Ventil reicht eine geringere Druckdifferenz zur Öffnung des Ventils aus; ebenso schließt das Ventil dann auch später und ermöglicht so einen größeren Volumenstrom zwischen Öffnung und Schließung des Ventils. Bei einer Erhöhung der Zuhaltekraft, also einer Verhärtung des Ventils, öffnet das Ventil erst bei einer höheren Druckdifferenz und schließt früher. Die gezielte Verstellung kann stufenlos oder stufig erfolgen und so jede gewünschte Ventilcharakteristik gezielt erreichen. Der Vorteil resultiert aus einer Möglichkeit, baugleiche Ventile an unterschiedliche, sich eventuell während des Betriebes geänderte, Drucksituationen anzupassen und diese baugleichen Ventile in unterschiedlichen Vorrichtungen einzusetzen.

In einer vorteilhaften Ausführungsform kann hierbei die oben beschriebene Verstellung über eine Verstellung des Widerlagers erfolgen. Hierbei ist bevorzugt an eine axiale Verstellung gedacht mit beispielsweise einem Gewinde auf der Ventilführung des Grundkörpers und einer Mutter, welche das Spannmittel stärker be- oder entlastet. Ebenso könnten Abstandshalter, welche beispielsweise scheibenförmig ausgebildet sind, auf der Spannmittelanlageseite des Grundkörpers oder des Ventilkörpers diese Verstellung bewirken. Alternativ ließe sich auch eine Rast- oder Klemmfunktion zum Ändern der Kennlinie des Spannmittels realisieren. Derlei Verstellungsmöglichkeiten könnten bei entsprechender Ausgestaltung bevorzugt werkzeuglos ausgeführt sein, um bei entsprechendem Bedarf, Orts- und Werkzeugungebunden vorgehen zu können.

Ebenso lässt sich in einer weiteren Ausführungsform eine Änderung der Ventilcharakteristik, nämlich dem Öffnungs- bzw. Schließdruck, über einen einfachen und schnellen Wechsel des Spannmittels vornehmen. Hierzu wird das Spannmittel von der Ventilführung des Ventilkörpers gezogen und anschließend dann das Wechselspannmittel mit anderer Federkennlinie eingesetzt. In einer Modifikation der Ausführung kann dieser Wechsel dann werkzeuglos vorgenommen werden, wobei das Spannmittel mit Schnapphaken in der Ventilführung des Ventilkörpers gegengelagert wird und diese Schnapphaken sich federelastisch von Hand zusammendrücken lassen, um das Spannmittel freizugeben. Aufgrund der dauernden Federelastizität der Schnapphaken kann das neue Spannmittel, bevorzugt eine Spiralfeder, ebenso dauerhaft wieder eingebracht werden. Es sind allerdings noch weitere werkzeuglose Wechselmöglichkeiten, wie zum Beispiel eine Flügelmutter, welche das Widerlager darstellt und über einen Endanschlag gekontert wird oder ähnliche im Stand der Technik bekannte Lösungen, denkbar.

Bei vorteilhaften Ausführungen ist der Ventilkörper und / oder Grundkörper aus spritzgießfähigem Materialien gebildet. Hier sind bevorzugte Materialien wie z. B. Polyamid PA zu nennen, welche sich durch eine gute Temperaturbeständigkeit, Festigkeit und eine gewisse Resistenz gegen aggressive Medien auszeichnen. Die normalerweise in einer Kurbelgehäuseentlüftung oder einem Ölmodul wirkenden Temperaturen liegen ungefähr in einem Bereich zwischen einer Starttemperatur von ca. -20 °C bis zu einer Betriebstemperatur von ca. 130°C. Durch die einfache Ausführung der Ventilteile kann das Spritzgießwerkzeug günstig hergestellt werden, welches sich positiv auf die Gesamtkosten des Ventils auswirkt. Das Ventilmaterial kann so den jeweiligen Erfordernissen der Einbausituation angepasst werden. So lässt sich auf diesem Weg eine einfache und trotzdem sichere Abdichtung zwischen Ventilsitz und Ventilkörper erzielen, indem die Dichtmittel am Ventilkörper oder am Grundkörper, insbesondere in 2-Komponenten-Technik, mit z.B. Polyamid PA als Grundkomponente und einem thermoplastischen Elastomer TPE als Weichkomponente, angespritzt werden. Hier ist eine Ringdichtung bevorzugt zu nennen. Es lässt sich jedoch auch eine Dichtraupe oder weitere dichtfähige Ausgestaltungen, welche aus dem Stand der Technik bekannt sind, verwenden. In einer weiteren Ausgestaltung spritzt man zusätzlich zu dem Dichtmittel das Spannmittel, bevorzugt eine Kunststoffspiralfeder oder ein federelastischer Elastomerblock, direkt an den Grundkörper. So erhält man ein Ventil, welches nur aus zwei Elementen besteht und so einfach herstellbar, leicht, universell einsetzbar und günstig ist.

In einer weiteren vorteilhaften Ausführungsform ist eine dem Ventil zugeordnete Klemmeinrichtung vorgesehen, die den Ventilkörper in mindestens einer seiner beiden Endpositionen mit einer quer zur Verstellrichtung wirkenden Klemmkraft beaufschlagt. Zur Beeinflussung der Federcharakteristik und des Öffnungs- bzw. Schließverhaltens kann das Ventil mit einer Klemmeinrichtung versehen werden, welche den Ventilkörper mit einer Klemmkraft beaufschlagt, die quer zur Verstellrichtung in Radialrichtung verläuft und den Ventilkörper in der Ventilkörperführung festklemmt. Die Klemmeinrichtung umfasst ein zusätzliches Spannelement, insbesondere eine Feder, die insbesondere als Druckfeder ausgeführt ist. Das Spannelement ist an beiden axialen Stirnseiten mit Rastelementen, insbesondere Rastkugeln verbunden, welche durch die Kraft des Spannmittels radial nach außen mit einer Klemmkraft beaufschlagt werden und in Rastausnehmungen eingepresst werden, die bevorzugt in der Innenwand der Ventilkörperführung ausgebildet sind und zweckmäßig an die Form der bevorzugt gewählten Rastkugeln angepasst sind. Ebenso sind allerdings auch reibschlüssige Verbindungen denkbar. Die Klemmeinrichtung befindet sich in der Schließposition des Ventilkörpers in ihrer Raststellung, so dass für ein Überführen des Ventiles in die Öffnungsstellung eine höhere Druckdifferenz erforderlich ist als bei Ausführungen ohne Klemmeinrichtung. Die Höhe des zusätzlich erforderlichen Druckes zum Lösen der Klemmeinrichtung und Überführen des Ventiles in die Öffnungsposition kann über die Kraft des Spannmittels sowie über die Geometrie der von dem Spannmittel beaufschlagten Rastelemente und die Geometrie der Rastausnehmungen beeinflusst werden. Nachdem der Grenzdruck erreicht worden ist, oberhalb dem das Ventil in die Öffnungsstellung überführt wird, werden zunächst auf Grund der axialen Stellbewegung des Ventilkörpers in Richtung Öffnungsposition die Rastelemente entgegen der Kraft des Spannmittels nach innen gedrückt und liegen bei einem Fortschreiten der Öffnungsbewegung an der Innenwand der Ventilkörperführung an. Die Klemmkraft, die von der Klemmeinrichtung im zwischenliegenden Überführungsabschnitt zwischen Schließ- und Öffnungsposition auf die Innenwand der Ventilkörperführung ausgeübt wird, ist deutlich geringer als die Klemmkraft in der Schließposition des Ventiles, da in Klemmposition die Klemmeinrichtung eine formschlüssige Raststellung einnimmt, im zwischenliegenden Überführungsabschnitt dagegen nur an der Innenwand entlang gleitet. Zusätzlich ist zu berücksichtigen, dass in Ruhestellung des Ventilkörpers zunächst eine höhere Haftreibung zwischen den von der Zusatzfeder beaufschlagten Rastelementen und den Rastausnehmungen zu überwinden ist, wohingegen bei einer Bewegung des Ventilkörpers nur eine geringere Gleitwirkung zwischen den nach außen gedrückten Rastelementen und der Innenwand der Ventilkörperführung wirkt. Dieser starke Abfall der Klemmkraft verändert die Gesamtfedercharakteristik und das Öffnungsverhalten des Ventiles. Der Ventilkörper ist gegenüber Ausführungen aus dem Stand der Technik mit höherer Überführungsgeschwindigkeit von der Schließposition in die Öffnungsposition zu überführen. Das Ventil kann schlagartig in die Öffnungsposition verstellt werden.

Ebenso lässt sich eine weitere Klemmeinrichtung andenken, die entsprechend wie die erste Klemmeinrichtung aufgebaut ist und ein weiteres Spannelement und von dem Spannelement beaufschlagte axiale Rastelemente umfasst. Die Rastelemente greifen in Öffnungsposition des Ventiles in Rastausnehmungen ein, die bevorzugt in der Innenwand der Ventilkörperführung ausgebildet sind. Auf diese Weise befindet sich der Ventilkörper sowohl in seiner Schließposition als auch in seiner Öffnungsposition jeweils in einer Raststellung, aus der eine Überführung in die jeweils gegenüberliegende Endposition nur mit einem erhöhten Kraftaufwand, verglichen mit Ausführungen ohne Klemmeinrichtungen, möglich ist. Dieses bewirkt, dass dem Ventil ein gewünschtes Bewegungsverhalten aufgeprägt werden kann, welches zu einer schlagartigen Öffnung und / oder Schließung des Ventils führen kann.

Das oben in verschiedenen Ausgestaltungen beschriebene Ventil kann in einer Filtereinrichtung, insbesondere einer Kurbelgehäuseentlüftung mit einem Filtergehäuse und einem Deckel, mit mindestens einem Einlass und mindestens einem Auslass, wobei Einlass und Auslass dichtend über ein Filterelement getrennt sind, eingesetzt werden. Einlass und Auslass können beliebig im Deckel oder im Filtergehäuse angeordnet sein, wobei das Gehäuse vorzugsweise eine zylindrische Form aufweist, jedoch auch in jeder beliebigen Form gestaltet sein kann. Kurbelgehäuseentlüftungen werden vorzugsweise in Brennkraftmaschinen eingesetzt, unabhängig ob stationär oder ambulant eingesetzt. Sie können zusätzlich jedoch überall dort eingesetzt werden, wo ein Druckraum, wie ein Kurbelgehäuse, innerhalb eines Druckfensters gehalten werden soll und das dort existierende Fluid, wie z. B. ein Gas-Öl Gemisch gereinigt bzw. getrennt werden soll. Bei einer Brennkraftmaschine sollte der Druck im Kurbelgehäuse immer im Unterdruckbereich um ca. -5 bis ca. -15 mbar gegen Atmosphärendruck liegen, um die beim Verbrennungsvorgang entstehenden sogenannten Blow-By-Gase, die über die Kolbenringe in das Kurbelgehäuse gelangen, abzusaugen und keine Gase in Gegenrichtung in den Verbrennungsraum gelangen zu lassen. In seltenen Fällen bewegt sich das Druckfenster in einem Bereich zwischen ca. -5 bis ca. +5 mbar gegen Atmosphärendruck. Diese Werte werden beispielsweise erzielt, wenn das Kurbelgehäuse direkt mit der Atmosphäre verbunden ist, welches jedoch aus Umweltschutzgedanken nicht erwünscht bzw. nicht zulässig ist. Deshalb werden die Kurbelgehäusegase von der Kurbelgehäuseentlüftung aus dem Kurbelgehäuse gesaugt, da innerhalb der Kurbelgehäuseentlüftung ein relativer Unterdruck gegenüber dem Kurbelgehäuse herrscht. Die in das Kurbelgehäuse gesaugten ölhaltigen Gase werden beim Durchgang durch das Filterelement gereinigt und von den Ölanteilen getrennt. Sollte aufgrund eines widrigen Umstandes im Filtergehäuse vor dem Filterelement ein Überdruck entstehen, kann dieser über ein Überdruckventil in die Atmosphäre abgelassen werden. Das sich im Filterelement sammelnde Öl kann über ein im Filterelement integriertes Umgehungsventil und einen separaten Ölablass wieder in das Kurbelgehäuse zurückgeführt werden. Ein Auslass auf der Reinseite der Filtereinrichtung ist mit der Ansaugleitung verbunden und wird mit einem stark wechselnden relativem Unterdruck beaufschlagt. Diese Druckschwankungen können durch ein zwischen Reinseite und Auslass eingebundenes Druckregulierventil ausgeglichen werden, um so ein Durchschlagen einer zu großen Druckdifferenz auf den Druck im Kurbelgehäuse zu verhindern. Diese drei in ihrer Anwendung verschiedenen Ventile können durch Ausgestaltungen des Einfachsventils realisiert werden. Die Ausführungen lassen auch sehr große Volumenströme von über 1000 l/min. zu, wie sie z.B. in Industriemotoren benötigt werden, ohne den Bauraum von Ventilen aus dem Stand der Technik zu benötigen.

Eine vorteilhafte Realisierung dieser Filtereinrichtung beinhaltet ein Druckregulierungsventil, wobei Ausgestaltungen des oben beschriebenen Ventils mit einer Rollmembran, bevorzugt am äußeren radialen Ende der Ventilkörperendscheibe angebracht, welche einen Druckraum zur Steuerung von einer Durchströmleitung trennt, ergänzt werden. Die Steuerseite, welche vorzugsweise auf der Gehäuseaußenseite angeordnet ist, steht korrespondierend mit einem Steuerungsdruck, bevorzugt Atmosphärendruck in Verbindung, wohingegen auf der Durchströmseite die Druckdifferenz des durchströmenden Fluides herrscht, hier bevorzugt die Druckdifferenz zwischen Reinseite und Saugrohrdruck. Diese Rollmembran, die sich bei einer bevorzugt axialen Bewegung des Ventilkörpers zwischen diesem und einer Gehäusewand dichtend abrollt, hat den Vorteil, den Ventilkörper nahezu kräftefrei zu halten, trotzdem die Möglichkeit zu haben, axial einen größeren Weg des Ventilkörpers zur Steuerung größerer Volumenströme zuzulassen und einen sehr geringen Platzbedarf zu haben. Die Ventilcharakteristik wird dadurch hauptsächlich über das Spannmittel bewirkt und kann so über die oben genannten Ausgestaltungen gezielt beeinflusst werden.

In einer bevorzugten Ausführungsform der Filtereinrichtung ist das Spannmittel des Druckregulierungsventils auf der Steuerungsseite des Ventils angebracht. Dieses bewirkt wiederum die einfache Möglichkeit der Wartung und der Einstellung der Ventilcharakteristik über die Verstellmöglichkeiten des Spannmittels, da im bevorzugten Anwendungsfall die Steuerungsseite gehäuseaußenseitig untergebracht ist und so eine gute Erreichbarkeit gegeben ist.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Die Erfindung wird nachfolgend in der Zeichnung anhand von schematischen Ausführungsbeispielen beschrieben. Hierbei zeigt
- Figur 1: eine perspektivische Ansicht einer Filtereinrichtung, in deren Gehäusedeckel ein Überdruckventil angeordnet ist,
- Figur 2: die Filtereinrichtung in einem Längsschnitt,
- Figur 3: eine schematische Darstellung eines Überdruckventiles, dessen Ventilkörper in Schließposition des Ventiles von einer Klemmeinrichtung mit einer quer zur Verschieberichtung des Ventilkörpers wirkenden Klemmkraft beaufschlagt wird,
- Figur 4: ein Überdruckventil in einer modifizierten Ausführung mit zwei separat ausgeführten Klemmeinrichtungen, über die der Ventilkörper des Überdruckventiles sowohl in seiner Schließposition als auch in seiner Öffnungsposition mit einer Klemmkraft beaufschlagt wird,
- Figur 5: eine perspektivische Ansicht einer Ausführung eines Einfachstventils mit integrierter Dichtung und einer Spiralfeder als Spannelement,
- Figur 6: eine schematische Ansicht eines Einfachstventils,
- Figur 7: eine konstruktive Darstellung eines Druckregulierventils mit einer Rollmembran in einer geöffneten Position mit einer Angabe der Strömungsrichtung und dem interessierenden Teils des Gehäuses.

### Beschreibung der Ausführungsbeispiele

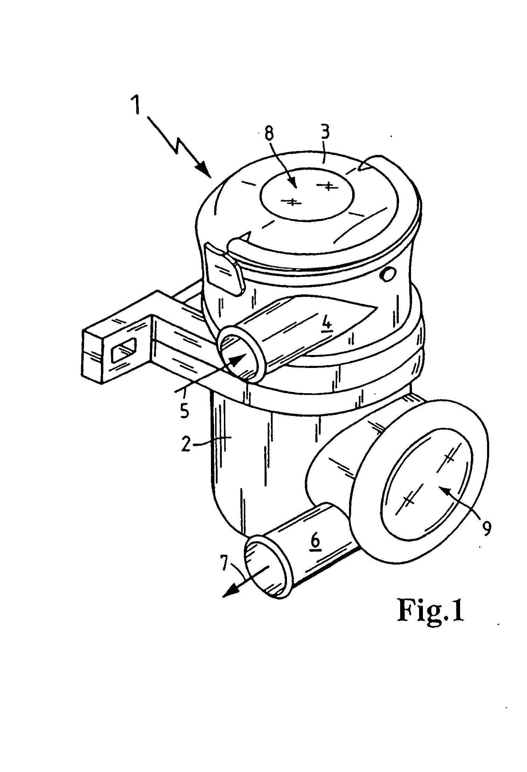

Die in Fig. 1 dargestellte Filtereinrichtung 1 weist in einem etwa zylindrischen Gehäuse 2, welches von einem abnehmbaren Gehäusedeckel 3 zu verschließen ist, ein von einem zu reinigenden Medium zu durchströmendes Filterelement auf, wobei das zu reinigende Medium über einen seitlich am Filtergehäuse 2 angeordneten Einlasskanal 4 in Pfeilrichtung 5 in den Innenraum der Filtereinrichtung einführbar ist und nach erfolgter Reinigung das Medium über einen weiteren, seitlich angeordneten Auslasskanal 6 in Pfeilrichtung 7 abgeleitet wird. Das zu reinigende Medium kann gasförmig, gegebenenfalls auch flüssig sein. Gemäß einer bevorzugten Ausführung ist die Filtereinrichtung 1 als Ölabscheider ausgebildet, in welchem Öltröpfchen aus einem Öl-Luft-Gemisch abgeschieden werden, welche beispielsweise im Kurbelgehäuse einer Brennkraftmaschine entsteht, wobei die gereinigte Luft aus dem Kurbelgehäuse abgeleitet und insbesondere einem Ansaugkanal der Brennkraftmaschine zugeführt wird. Es kommt aber auch eine Anwendung in einem Gasfilter oder einem Flüssigkeitsfilter in Betracht.

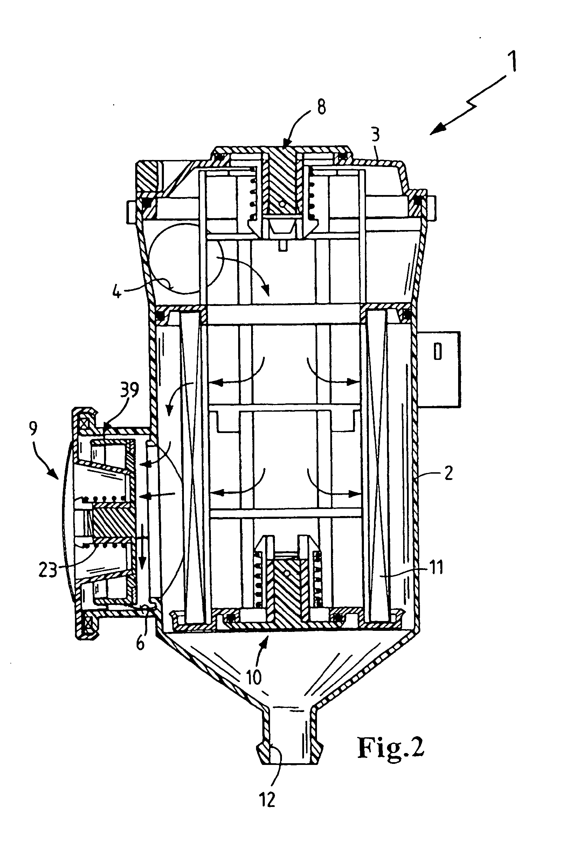

Wie Fig. 1 in Verbindung mit Fig. 2 zu entnehmen, ist in den Gehäusedeckel 3, welcher im Bereich einer axialen Stirnseite des Filtergehäuses 2 angeordnet ist, ein Überdruckventil 8 integriert, welches mit dem Druck auf der Anströmseite des Filterelementes beaufschlagt wird und im Falle eines Übersteigens eines zulässigen Grenzdruckes in seine Öffnungsposition verstellt wird, so dass das eingeleitete Medium auf der Rohseite das Filtergehäuse verlassen kann und eine Überlastung verhindert wird.

Auf der Reinseite der Filtereinrichtung befindet sich im Bereich des Auslasskanals 6 ein Druckregulierungsventil 9, über das verhindert werden soll, dass im Kurbelgehäuse ein zu hoher Unterdruck entsteht. Hier muss immer ein relativ geringer Unterdruck herrschen, welcher sich in einem sehr kleinem Druckfenster bewegt. Bei einem sehr hohem Unterdruck auf der Saugrohrseite, würde sich dieser entgegen der Ausströmrichtung 7 über das im Normalfall offene Druckregulierventil 9 entgegen der Einströmrichtung 5 bis in das Kurbelgehäuse fortpflanzen. Das Druckregulierungsventil 9 befindet sich für den Fall, dass auf der Reinseite ein relativer Unterdruck, welcher sich innerhalb des gewünschten Druckfensters befindet, gegenüber der Außenseite der Filtereinrichtung2 besteht, in Öffnungsposition. Dieses wird durch eine Voreinstellung des Druckregulierventils 9 mittels der Ventilfeder 23 erzielt. Übersteigt der relative Unterdruck gegenüber dem Druck auf der Außenseite der Filtereinrichtung 2 jedoch die diesem Druck entgegenwirkende Vorspannkraft der Ventilfeder 23, wird das Druckregulierventil in seine Schließposition überführt.

Wie der Schnittdarstellung gemäß Fig. 2 weiterhin zu entnehmen, wird das zu reinigende Medium über den Einlasskanal 4 in das Innere des Filtergehäuses 2 eingeleitet, in welchem sich ein zylindrisches Filterelement 11 befindet, dessen radiale Innenseite die Anströmseite bildet und von dem zu reinigenden Fluid radial von innen nach außen durchströmt wird. Im Falle eines Abscheiders werden die abgeschiedenen Öltröpfchen auf der radialen Außenseite des Filterelementes 11 nach unten abgeleitet. Die gereinigte Luft passiert das Filterelement radial von innen nach außen, wird in einem das Filterelement 11 radial umgreifenden Ringraum gesammelt und nach dem Passieren des Druckregulierungsventiles 9 nach außen abgeleitet.

Im Inneren des Filterelements 11 sammelt sich eine gewisse Ölmenge, welches durch das Einströmen und Umlenken sowie Expansion und Geschwindigkeitsänderungen des Fluidstromes hervorgerufen wird. Dieses im Inneren aufgefangene Öl wird im Normalfall nach und nach durch die Druck differenz von Rohseite zu Reinseite durch das Filterelement 11 gesaugt. Für den Fall einer Verblockung des Filterelements 11 oder einer Ansammlung von zuviel Öl befindet sich im Bodenbereich im Innenraum des Filterelementes 11 ein Bypassventil 10, welches bei Übersteigen eines Mindestdruckes in seine Öffnungsposition überführt wird, woraufhin die abgeschiedenen Öltröpfchen nach unten abgeleitet und über einen konisch zulaufenden Bereich des Filtergehäuses 2 sowie einen Austrag 12 abgeleitet werden.

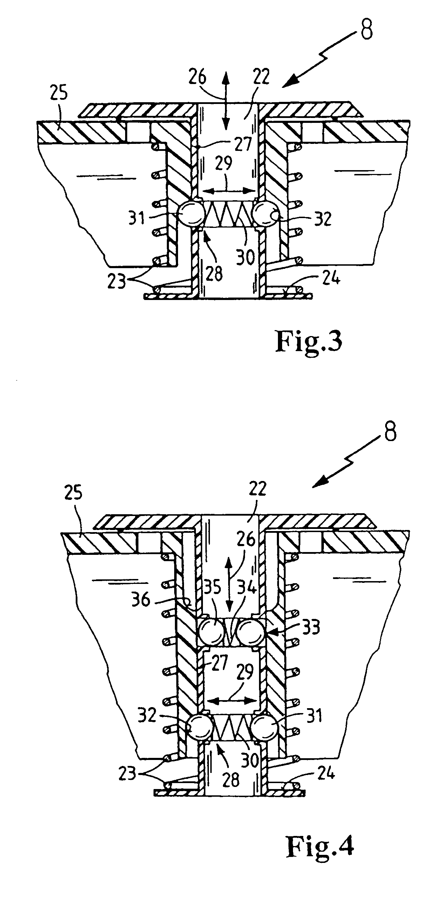

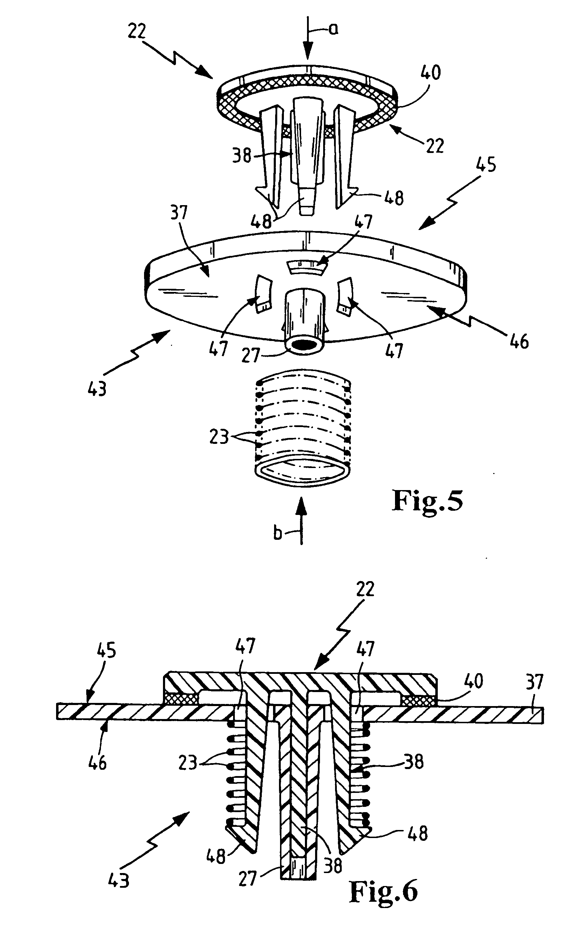

In Fig. 3 ist eine besondere Ausgestaltung eines Überdruckventiles 8 dargestellt. Bei der Figur 3 handelt es sich um ein Beispiel, welches das Verständnis der Erfindung, speziell bei der Möglichkeit der Verwendung von Klemmeinrichtungen, erleichtern soll. Das Überdruckventil 8 besitzt einen Ventilkörper 22, welcher in Verstellrichtung 26 axial in einer Ventilkörperführung 27 zwischen der in Fig. 5 dargestellten Schließstellung und einer angehobenen Öffnungsstellung zu verstellen ist, wobei die Ventilkörperführung 27 in einem Gehäuseteil 25 ausgebildet ist. Der Ventilkörper 22 wird über eine Ventilfeder 23, welche an einem fest mit dem Ventilkörper 22 verbundenen Ventilteller 24 abgestützt ist, in seine Schließposition beaufschlagt. Bei einem im Inneren des Gehäuses wirkenden Überdruck, welcher die Schließkraft der Ventilfeder 23 übersteigt, wird der Ventilkörper 22 in seine Öffnungsposition verstellt, so dass der Überdruck entweichen kann.

Zur Beeinflussung der Federcharakteristik und des Öffnungs- bzw. Schließverhaltens ist das Überdruckventil 8 mit einer Klemmeinrichtung 28 versehen, welche den Ventilkörper 22 mit einer Klemmkraft beaufschlagt, die gemäß Pfeilrichtung 29 quer zur Verstellrichtung 26 in Radialrichtung verläuft und den Ventilkörper 22 in der Ventilkörperführung 27 festklemmt. Die Klemmeinrichtung 28 ist fest mit dem Ventilkörper 22 verbunden und umfasst eine Zusatzfeder 30, die insbesondere als Druckfeder ausgeführt ist und deren Federwirkung in Pfeilrichtung 29 verläuft. Die Zusatzfeder 30 ist an ihren beiden axialen Stirnseiten mit Rastkugeln 31 verbunden, welche durch die Kraft der Zusatzfeder radial nach außen mit einer Klemmkraft beaufschlagt werden und in Rastausnehmungen 32 eingepresst werden, die in der Innenwand der Ventilkörperführung 27 ausgebildet sind und zweckmäßig an die Form der Rastkugeln 31 angepasst sind. Die Klemmeinrichtung 28 befindet sich in der Schließposition des Ventilkörpers 22 in ihrer Raststellung, so dass für ein Überführen des Überdruckventiles 8 in die Öffnungsstellung ein höherer Überdruck erforderlich ist als bei Ausführungen ohne Klemmeinrichtung 28. Die Höhe des zusätzlich erforderlichen Druckes zum Lösen der Klemmeinrichtung 28 und Überführen des Ventiles in die Öffnungsposition kann über die Kraft der Zusatzfeder 30 sowie die Geometrie der von der Zusatzfeder beaufschlagten Rastelemente und die Geometrie der Rastausnehmungen beeinflusst werden.

Nachdem der Grenzdruck erreicht worden ist, oberhalb dem das Ventil in die Öffnungsstellung überführt wird, werden zunächst auf Grund der axialen Stellbewegung des Ventilkörpers in Richtung Öffnungsposition die Rastkugeln 31 entgegen der Kraft der Zusatzfeder 30 nach innen gedrückt und liegen bei einem Fortschreiten der Öffnungsbewegung an der Innenwand der Ventilkörperführung 27 an. Die Klemmkraft, die von der Klemmeinrichtung im zwischenliegenden Überführungsabschnitt zwischen Schließ- und Öffnungsposition auf die Innenwand der Ventilkörperführung ausgeübt wird, ist deutlich geringer als die Klemmkraft in der Schließposition des Ventiles, da in Klemmposition die Klemmeinrichtung eine formschlüssige Raststellung einnimmt, im zwischenliegenden Überführungsabschnitt dagegen nur an der Innenwand entlang gleitet. Zusätzlich ist zu berücksichtigen, dass in Ruhestellung des Ventilkörpers zunächst eine höhere Haftreibung zwischen den von der Zusatzfeder beaufschlagten Rastelementen und den Rastausnehmungen zu überwinden ist, wohingegen bei einer Bewegung des Ventilkörpers nur eine geringere Gleitwirkung zwischen den nach außen gedrückten Rastelementen und der Innenwand der Ventilkörperführung wirkt.

Dieser starke Abfall der Klemmkraft verändert die Gesamtfedercharakteristik und das Öffnungsverhalten des Ventiles. Der Ventilkörper ist gegenüber Ausführungen aus dem Stand der Technik mit höherer Überführungsgeschwindigkeit von der Schließposition in die Öffnungsposition zu überführen. Das Ventil kann schlagartig in die Öffnungsposition verstellt werden.

Auch im Ausführungsbeispiel nach Fig. 4 ist ein Überdruckventil 8 dargestellt, welches sich in seiner Schließposition befindet und axial in Verstellrichtung 26 zwischen Schließ- und Öffnungsposition zu verstellen ist. Auch bei der Figur 4 handelt es sich um ein Beispiel, welches das Verständnis der Erfindung, speziell bei der Möglichkeit der Verwendung von Klemmeinrichtungen, erleichtern soll. Das Ventil besitzt wie dasjenige des vorherigen Ausführungsbeispieles eine Klemmeinrichtung 28, über die der Ventilkörper 22 in Schließposition mit einer quer zur Verstellrichtung 26 liegenden Klemmkraft gemäß Pfeilrichtung 29 beaufschlagt wird. Des Weiteren ist eine zweite Klemmeinrichtung 33 vorgesehen, die entsprechend wie die erste Klemmeinrichtung 28 aufgebaut ist und eine weitere Zusatzfeder 34 und von der Zusatzfeder 34 beaufschlagte, axiale Rastkugeln 35 umfasst. Die Rastkugeln 35 greifen in Öffnungsposition des Ventiles in Rastausnehmungen 36 ein, die in der Innenwand der Ventilkörperführung 27 ausgebildet sind. Auf diese Weise befindet sich der Ventilkörper 22 sowohl in seiner Schließposition als auch in seiner Öffnungsposition jeweils in einer Raststellung, aus der eine Überführung in die jeweils gegenüberliegende Endposition nur mit einem erhöhten Kraftaufwand möglich ist, verglichen mit Ausführungen ohne Klemmeinrichtungen. Die Schließbewegung des Ventiles wird hierbei durch die Kraft der Ventilfeder 23 unterstützt. Sobald der Überdruck im Gehäuseinneren einen Grenzwert unterschreitet, reicht die Kraft der Ventilfeder aus, den Ventilkörper 22 gegen den verbleibenden Überdruck im Gehäuseinneren und gegen die Klemmkraft der zweiten Klemmeinrichtung 33 axial in Richtung seiner Schließposition zu verstellen. Analog zur Öffnungsbewegung kann mit Hilfe der zweiten Klemmeinrichtung 33 ein schlagartiges Schließen des Ventiles erreicht werden, da die Klemmkraft schlagartig reduziert wird, sobald die Rastkugeln 35 der zweiten Klemmeinrichtung 33 aus ihrem Sitz in den Rastausnehmungen 36 herausgehoben werden.

Die Figur 5 zeigt eine perspektivische Explosionsdarstellung eines Einfachstventils 43, welches als Überdruckventil 8, Druckregulierventil 9 oder auch als Bypassventil 10 eingesetzt werden kann, mit einem zylindrischen, im wesentlichen plattenförmigen Grundkörper 37, welcher eine Ventilkörperführung 27 zur Aufnahme eines Führungsdorns 38 des zylindrischen, im wesentlichen plattenförmigen Ventilkörpers 22 beinhaltet. Der Grundkörper weist eine Ventilseite 45, welche eine Dichtfunktion beinhaltet, und eine gegenüberliegende Gegenseite 46, auf. Weiterhin verfügt der Ventilkörper 22 über ein Widerlager 48, welches radial um den Führungsdorn 38 angeordnet ist. Durch eine passgenaue Auslegung von Führungsdorn 38 und Ventilkörperführung 27 ist eine exakte Zentrierung des Ventilkörpers 22 gewährleistet. Die Abdichtung zwischen Ventilkörper 22 und Grundkörper 37 geschieht über eine in den Ventilkörper 22 integrierte Ringdichtung 40, welche im geschlossenen Ventilzustand am Grundkörper 37 dichtend anliegt. Das Widerlager 48 ist in mehrere Teile unterbrochen um so den Grundkörper 37 durch die vorhandenen Öffnungen 47 durchdringen zu können und eine Abstützung für das Spannmittel 23, insbesondere eine Schraubenfeder, zu bilden. Die Montage der Bauteile 22 und 23 erfolgt in Pfeilrichtung a bzw. b.

In Fig. 6 ist eine schematische Ansicht eines Einfachstventils 43 im montierten Zustand dargestellt. Der Fig. 5 entsprechenden Bauteile sind mit gleichen Bezugszeichen versehen. Wie Fig. 6 in Verbindung mit Fig. 5 zu entnehmen ist, übt das Spannmittel 23 eine Druckkraft auf der Grundseite 46 des Grundkörpers aus und zieht so den Ventilkörper 22 in Richtung des Spannelements dichtend an die Ventilseite 45 des Grundkörpers 37. Dieses ist eine Umkehrung des herkömmlichen Prinzips in dem der Ventilkörper gegen den Grundkörper gedrückt wird. Im geöffneten Zustand wird das Spannmittel 23 durch eine anliegende Mindestdruckdifferenz auf der Gegenseite 46 komprimiert, das Dichtmittel 40 hebt sich von der Ventilseite 45 und gibt einen Fluidstrom durch die Öffnungen 47 frei.

Es wird ersichtlich, dass dieses Einfachstventil mit sehr wenigen einfachen Teilen eine Ventilfunktion ausüben kann, ohne ein sonst übliches Gegenlager im Bereich des Einbaugehäuses zu benötigen. Dieses ergibt nicht nur einen positiven Kostenfaktor auf der Ventilseite, auch das Einbaugehäuse kann weitaus einfacher konstruiert und hergestellt werden.

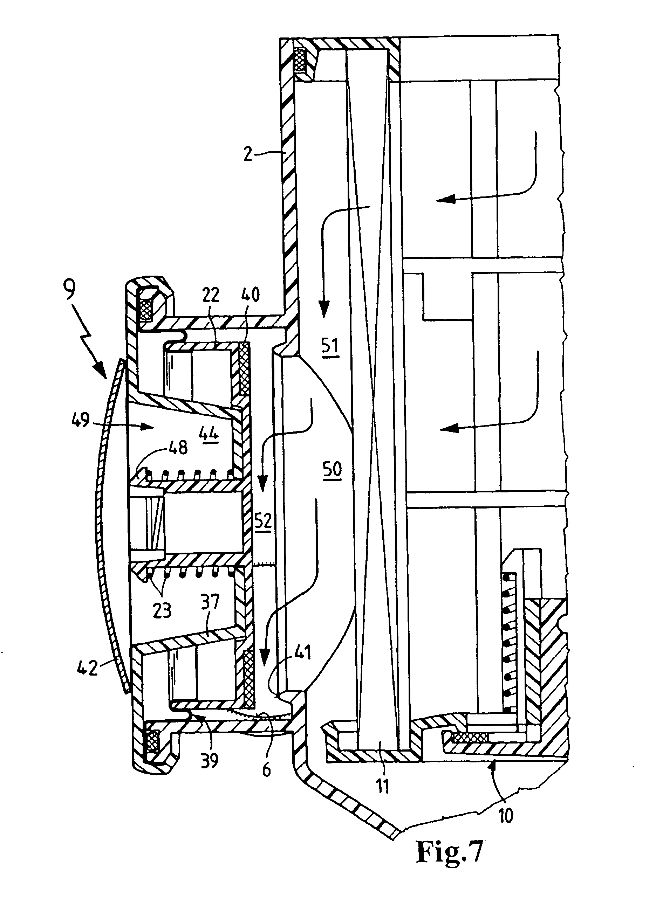

Die Fig. 7 zeigt eine Ausgestaltung des Einfachstventils 43 als Druckregulierungsventil 9 in einem relevanten Ausschnitt gemäß Fig. 2 in Offenstellung. Der Fig. 2 entsprechenden Bauteile sind mit gleichen Bezugszeichen versehen. Die zu reinigenden Gase durchströmen radial das Filterelement 11 von innen nach außen, um bei geöffnetem Druckregulierungsventil 9 durch einen Auslasskanal 6, gereinigt wieder der Ansaugluft zugeführt zu werden. Die Druckregelung erfolgt über die Differenz zwischen dem Druck in der Außenkammer 44, welche im äußeren Bereich des Gehäuses auf der nicht durchströmten, vom Atmosphärendruck gespeisten Seite angeordnet ist und welche hier die Steuerseite 49 darstellt und dem Druck im Reingasbereich auf der Durchströmseite 50 hinter dem Filterelement 11. Die Abtrennung der beiden Bereiche erfolgt über eine mit dem Ventilkörper 22 verbundene Rollmembran 39, welche einen Weg des Ventilkörpers 22 in Federrichtung zulässt und nahezu kräftefrei auf das Gesamtsystem wirkt. Die Anpassung des Druckregulierungsventils 9 an die erforderliche Druckdifferenz geschieht über die gewählte Federkraft der Ventilfeder 23. Wird die Druckdifferenz zu groß, das heißt der Saugrohrunterdruck zu hoch, verschließt das Druckregulierungsventil 9 den Weg von der Reingasseite zum Auslasskanal 6 indem sich der Ventilkörper 22 vom Grundkörper 37 abhebt und die am Ventilkörper 22 angebrachte Dichtung 40 auf einen Trennkragen 41 presst. Dieser Trennkragen 41 ist im wesentlichen radial aufgebaut und sorgt für eine Trennungsebene zwischen einer Reinseite 51 und einer Auslassseite 52, beide im Bereich der Durchströmseite 50. Hierdurch wird der Auslasskanal 6 verschlossen. Sobald die Druckdifferenz wieder absinkt und die entgegenwirkende Federkraft der Ventilfeder 23 groß genug ist löst sich der Ventilkörper 22 wieder vom Trennkragen 41 und gibt den Weg von der Reinseite 51 zur Auslassseite 52 wieder frei. Eine Einstellung der gewünschten Auslösedruckdifferenz kann über eine Veränderung der Federkraft vorgenommen werden. Aufgrund einer erfindungsgemäßen Ausführung des Druckregulierungsventils lässt sich diese Veränderung der Federkraft einfach von der Gehäuseaußenseite vornehmen. Hierzu lässt sich der Schutzdeckel 42, welcher über der Außendruckkammer 44 angeordnet ist, werkzeuglos entfernen und gibt das Widerlager 48 mitsamt der eingespannten Ventilfeder 23 frei. Durch einfaches radiales Zusammendrücken der Schnapphaken, welche das Widerlager 48 bilden, lässt sich die Ventilfeder 23 entnehmen und durch eine Feder anderer Kennlinie ersetzen. Ebenso ist eine Verstellung über eine axiale Wegverstellung der Feder und dadurch resultierender geänderter Federkraft denkbar.

## Patentansprüche

1. Ventil zur Steuerung eines Fluidstromes, insbesondere zur Kurbelgehäuseentlüftung einer Brennkraftmaschine, aufweisend einen Grundkörper (37), einen Ventilkörper (22) und ein Spannmittel (23),wobei der Grundkörper (37) über eine Ventilseite (45) und eine, der Ventilseite (45) gegenüberliegend angeordnete, Gegenseite (46) verfügt, wobei ein Teil des Ventilkörpers (22) durch eine in dem Grundkörper (37) angeordnete Öffnung (47) hindurchragt, wobei das Spannmittel (23), insbesondere eine Spiralfeder, auf der Gegenseite des Grundkörpers (37) und korrespondierend zwischen der Gegenseite (46) des Grundkörpers (37) und dem Ventilkörper (22) angeordnet ist, **dadurch gekennzeichnet, dass** ein weiterer Teil des Ventilkörpers (22), welcher durch den Grundkörper (37) hindurchragt, als Führungsdorn (38) ausgebildet ist, welcher in einer Ventilkörperführung (27) des Grundkörpers (37) geführt ist und dass der Grundkörper (37) und der Ventilkörper (22) zur Erzielung einer Dichtwirkung korrespondieren.

2. Ventil nach Anspruch 1, **dadurch gekennzeichnet, dass** der Teil des Ventilkörpers (22), welcher durch den Grundkörper (37) hindurchragt, als Widerlager (48) für das Spannmittel (23), insbesondere als Schnapphaken, ausgebildet ist.

3. Ventil nach einem der vorhergehenden Ansprüche, **dadurch gekennzeichnet, dass** die Ventilcharakteristik, welche durch die Kombination des Spannmittels (23) mit dem Ventilkörper (22) und dem Grundkörper (37) definiert ist, gezielt verstellbar ist.

4. Ventil nach Anspruch 3, **dadurch gekennzeichnet, dass** die Ventilcharakteristik durch eine, insbesondere axiale, Verstellung des Widerlagers (48), insbesondere werkzeuglos, veränderbar ist.

5. Ventil nach Anspruch 3, **dadurch gekennzeichnet, dass** die Ventilcharakteristik durch einen Wechsel des Spannmittels (23), insbesondere werkzeuglos, veränderbar ist.

6. Ventil nach einem der vorhergehenden Ansprüche, **dadurch gekennzeichnet, dass** ein Dichtmittel (40) vorgesehen ist, welches direkt am Ventilkörper (22), welcher aus einem spritzgießfähigen Material besteht, insbesondere angespritzt ist.

7. Ventil nach einem der Ansprüche 1 bis 6, **dadurch gekennzeichnet, dass** ein Dichtmittel (40) vorgesehen ist, welches direkt am Grundkörper (37), welcher aus einem spritzgießfähigen Material besteht, insbesondere angespritzt ist.

8. Ventil nach einem der vorhergehenden Ansprüche, **dadurch gekennzeichnet, dass** das Spannmittel (23) an den Grundkörper (37), welcher aus einem spritzgießfähigen Material besteht, angespritzt ist.

9. Ventil nach einem der vorhergehenden Ansprüche, **dadurch gekennzeichnet, dass** der Ventilkörper (22) in mindestens einer seiner beiden Endpositionen von einer Klemmeinrichtung (28) mit einer quer zu seiner Verstellrichtung wirkenden Klemmkraft beaufschlagt ist.

10. Filtereinrichtung (1) zur Reinigung eines Fluidstromes, insbesondere von Kurbelgehäusen, aufweisend ein Filtergehäuse (2) und einen Gehäusedeckel (3), wobei ein Einlass (4) und einen Auslass (6) vorgesehen ist, und wobei der Auslass (6) durch ein Filterelement (11) dichtend von dem Einlass (4) getrennt ist, und wobei ein Ventil (8,9,10) zur Reduzierung einer Druckdifferenz vorgesehen ist, **dadurch gekennzeichnet, dass** das Ventil (8,9,10) gemäß einem der vorhergehenden Ansprüche aufgebaut ist.

11. Filtereinrichtung (1) nach Anspruch 10, **dadurch gekennzeichnet, dass** das Ventil als Druckregulierungsventil (9) ausgebildet ist und über eine Rollmembran (39) verfügt, wobei die Rollmembran (39) einerseits dichtend mit dem Ventilkörper (22) und andererseits dichtend zwischen dem Grundkörper (37) und einem Gehäuseteil (2,3) angeordnet ist, wobei die Rollmembran (39) eine Steuerseite (49) dichtend von einer Durchströmseite (50) trennt, und wobei die Steuerseite (49) korrespondierend mit einem Umgebungsdruck und die Durchströmseite (50) korrespondierend mit einem fluiddurchströmten Innenvolumen der Gehäuseteile (2, 3) verbunden ist.

12. Filtereinrichtung nach Anspruch 11, **dadurch gekennzeichnet, dass** das Spannmittel (23) auf der Steuerseite (49) des Ventils angeordnet ist.

## Claims

1. Valve for controlling a fluid flow, more especially for ventilating the crankcase of an internal combustion engine, including a base body (37), a valve body (22) and a biasing means (23), wherein the base body (37) has one valve side (45) and one opposite side (46), which is disposed opposite the valve side (45), wherein a part of the valve body (22) protrudes through an opening (47) which is disposed in the base body (37), wherein the biasing means (23), more especially a helical spring, is disposed on the opposite side (46) of the base body (37) in a corresponding manner between the opposite side (46) of the base body (37) and the valve body (22), **characterised in that** another part of the valve body (22), which protrudes through the base body (37), is in the form of a guide bar (38), which is guided in a valve body guide means (27) of the valve body (37) and **in that** the base body (37) and the valve body (22) correspond to achieve a sealing effect.

2. Valve according to claim 1, **characterised in that** the part of the valve body (22), which protrudes through the base body (37), is in the form of an abutment (48) for the biasing means (23), more especially in the form of a snap hook.

3. Valve according to one of the preceding claims, **characterised in that** the valve characteristics, which are defined by the combination of the biasing means (23) with the valve body (22) and the base body (37), are adjustable in a specific manner.

4. Valve according to claim 3, **characterised in that** the valve characteristics are changeable by means of a, more especially axial, adjustment of the abutment (48), more especially without the use of tools.

5. Valve according to claim 3, **characterised in that** the valve characteristics are changeable by means of a change in the biasing means (23), more especially without the use of tools.

6. Valve according to one of the preceding claims, **characterised in that** a sealing means (40) is provided, said sealing means is more especially injection moulded directly to the valve body (22), which is produced from a material that is able to be injection moulded.

7. Valve according to one of claims 1 to 6, **characterised in that** a sealing means (40) is provided, said sealing means is more especially injection moulded directly to the base body (37), which is produced from a material that is able to be injection moulded.

8. Valve according to one of the preceding claims, **characterised in that** the biasing means (23) is injection moulded to the base body (37), which is produced from a material that is able to be injection moulded.

9. Valve according to one of the preceding claims, **characterised in that** the valve body (22), in at least one of its two end positions, is impinged upon by a clamping device (28) with a clamping force which works transversely relative to its direction of adjustment.

10. Filter device (1) for filtering a fluid flow, more especially of crankcases, including a filter housing (2) and a housing cover (3), wherein an inlet (4) and an outlet (6) are provided, and wherein the outlet (6) is separated in a sealing manner from the inlet (4) by means of a filter element (11), and wherein a valve (8, 9, 10) is provided for reducing a pressure difference, **characterised in that** the valve (8, 9, 10) is designed in accordance with one of the preceding claims.

11. Filter device (1) according to claim 10, **characterised in that** the valve is in the form of a pressure-relief valve (9) and has a roller diaphragm (39), wherein the roller diaphragm (39) is disposed on the one side so as to be sealing with the valve body (22) and on the other side so as to be sealing between the base body (37) and a housing part (2,3), wherein the roller diaphragm (37) separates a control side (49) in a sealing manner from a flow-through side (50), and wherein the control side (49) is connected in a corresponding manner to an ambient pressure and the flow-through side (5) is connected in a corresponding manner to an internal volume of the housing parts (2, 3) flowed through by fluid.

12. Filter device according to claim 11, **characterised in that** the biasing means (23) is disposed on the control side (49) of the valve.

## Revendications

1. Soupape pour commander un courant de fluide, notamment pour l'aération de carter de vilebrequin d'un moteur à combustion interne, comprenant un corps de base (37), un corps de soupape (22) et un moyen de serrage (23), dans laquelle
le corps de base (37) présente une face de soupape (45) et une face antagoniste (48) disposée en regard de la face de soupape (45),
une partie du corps de soupape (22) fait saillie à travers une ouverture (47) prévue dans le corps de base (37), et
le moyen de serrage (23), notamment un ressort en spirale, est disposé sur la face antagoniste du corps de base (37) et en correspondance entre la face antagoniste (48) du corps de base (37) et le corps de soupape (22),
**caractérisée en ce qu'**
une autre partie du corps de soupape (22) faisant saillie à travers le corps de base (37) a la forme d'un goujon de guidage (38) guidé dans un guidage de corps de soupape (27), et
le corps de base (37) et le corps de soupape (22) correspondent pour obtenir un effet d'étanchéité.

2. Soupape selon la revendication 1,
**caractérisée en ce que**
la partie du corps de soupape (22) qui fait saillie à travers le corps de base (37) a la forme d'un palier-support (48) pour le moyen de serrage (23), notamment d'un crochet à déclic.

3. Soupape selon l'une quelconque des revendications précédentes,
**caractérisée en ce que**
la caractéristique de soupape qui est définie par la combinaison du moyen de serrage (23) avec le corps de soupape (22) et le corps de base (37) est réglable de manière ponctuelle.

4. Soupape selon la revendication 3,
**caractérisée en ce que**
la caractéristique de soupape peut être modifiée, notamment sans outils, par un réglage en particulier axial du palier-support (48).

5. Soupape selon la revendication 3,
**caractérisée en ce que**
la caractéristique de soupape peut être modifiée, notamment sans outils, par un changement du moyen de serrage (23).

6. Soupape selon l'une quelconque des revendications précédentes,
**caractérisée en ce qu'**
un moyen d'étanchéité (40) directement rapporté, notamment par injection, sur le corps de soupape (22), est réalisé à partir d'un matériau moulé par injection.

7. Soupape selon l'une quelconque des revendications précédentes,
**caractérisée en ce qu'**
un moyen d'étanchéité (40) directement rapporté, notamment par injection, sur le corps de base (37), est réalisé à partir d'un matériau moulé par injection.

8. Soupape selon l'une quelconque des revendications précédentes,
**caractérisée en ce que**
le moyen de serrage (23) est rapporté par injection sur le corps de base (37) réalisé à partir d'un matériau moulé par injection.

9. Soupape selon l'une quelconque des revendications précédentes,
**caractérisée en ce que**
le corps de soupape (22), dans au moins une de ses deux positions terminales, est sollicité par un dispositif de serrage (28) exerçant une force de serrage transversale à sa direction de réglage.

10. Dispositif de filtration (1) pour nettoyer un courant de fluide, notamment de carters de vilebrequin, comprenant un boîtier de filtre (2) et un couvercle de boîtier (3), dont une entrée (4) est séparée de façon étanche d'une sortie (6) par un élément filtrant, et avec une soupape (8, 9, 10) prévue pour réduire une différence de pression,
**caractérisé en ce que**
la soupape (8, 9, 10) est construite selon l'une quelconque des revendications précédentes.

11. Dispositif de filtration (1) selon la revendication 10,
**caractérisé en ce que**
la soupape est une soupape de régulation de pression (9) qui présente une membrane à enroulement (39), d'une part étanche avec le corps de soupape (22) et d'autre part étanche entre le corps de base (37) et une partie de boîtier (2, 3), la membrane à enroulement (39) sépare de façon étanche un côté de commande (49) d'une côté de passage (50), et le côté de commande (49) est relié en correspondance à un volume intérieur des parties de boîtier (2, 3) traversé par un fluide.

12. Dispositif de filtration selon la revendication 11,
**caractérisé en ce que**
le moyen de serrage (23) est disposé côté de commande (49) de la soupape.
